# EUROPEAN PATENT SPECIFICATION

(11) **EP 3 050 162 B1**
(45) Date of publication and mention of the grant of the patent: **24.10.2018**
(21) Application number: 14780739.0
(22) Date of filing: 24.09.2014
(51) Int. Cl.: H01R 11/05, H01R 4/02, H01M 2/20, H01M 2/22, H01R 11/28, H01R 13/187, H01M 2/30

(54) **ELECTRICAL SYSTEM**
ELEKTRISCHES SYSTEM
SYSTÈME ÉLECTRIQUE

(30) Priority: 25.09.2013 US 201361882433 P; 23.09.2014 US 201414493757
(43) Date of publication of application: 03.08.2016
(73) Proprietor: TE Connectivity Corporation, Berwyn, PA 19312 (US)
(72) Inventor: ZHAO, Weiping, Superior Twp., Michigan 48198 (US); SIMPSON, Douglas Scott, Mt. Clemens, Michigan 48043 (US)
(74) Representative: Johnstone, Douglas Ian
(86) International application number: PCT/US2014/057144
(87) International publication number: WO 2015/048085

(56) References cited:
- WO-A1-2011/082722
- DE-A1-102012 004 532
- JP-A- H1 167 184
- US-A- 5 154 646
- US-A1- 2003 060 090
- US-A1- 2013 089 996

## Description

The subject matter herein relates to an electrical system comprising a first battery module, a second battery module and a power terminal connector. Power terminal connectors are used in different types of connector systems. One application is an automotive application, such as for connectors of a battery of a vehicle. Some known power terminal connectors that connect between batteries use a flexible cable to allow for variation in positioning and vibration, however such power terminal connectors are typically bolt and nut connections to the terminals of the battery. Such systems require many parts and a lengthy assembly time to the batteries. Such systems have over-torque, under-torque and cross thread problems.

Some known power terminal connectors are quick connection type connectors to overcome the lengthy assembly time and torque issues of the nut and bolt connections. For example, each battery may have a pin or blade and the jumper between the batteries includes power terminal connectors at each end of a cable or other interconnecting component that are pressed onto the pins or blades of adjacent batteries to make the electrical connection therebetween. The power terminal connectors typically have a terminal body that receives a spring contact. The spring contact creates a power path between the terminal body and a power terminal of the battery. Such jumpers include many parts and are typically more expensive than nut and bolt type of connectors.

An additional problem is that the components of the system need special handling to deal with high voltage, such as covers for all of the metal parts to avoid accidental touching. Such covers add additional components to the systems.

WO2011/082722 A1 discloses a flexible cell connector having first and second contacting portions and a flexible portion provided therebetween. A metal sheet is welded to the second contacting portion. Both of the first contacting portion and metal plate are formed with a hole for receiving pole terminals of two separate batteries and are preferably welded to the terminals.

US2013/089996 A1 (on which the preamble of claim 1 is based) discloses a power terminal connector including a multi-layered bus bar having a first mounting portion, a second mounting portion and a flexible section therebetween. First and second terminal assemblies are releasably coupled to the mounting portions respectively and the terminal assemblies are coupled to respective pins of power terminals of adjacent batteries. The terminal assemblies each includes a contact spring to provide electrical connection with the pin.

US5154646A discloses a quick connect/disconnect coupler for dry cell batteries including a flexible metal strap with quick connect/disconnect clamps at each end. JP H11 67184A discloses a bus bar having a flexible connection part and terminal parts connected either end thereof. The terminal parts have holes for receiving the terminal pins of respective adjacent batteries. US2003/060090A discloses a terminal for use in connecting a battery cable to a rectangular blade of a battery. The terminal includes a terminal body and a spring member to provide good connection with the rectangular blade.

According to the invention, there is provided an electrical system according to claim 1 and comprising a first battery module, a second battery module and a power terminal connector, the power terminal connector comprising: a flexible conductor having a first mounting portion, a second mounting portion and a flexible section between the first and second mounting portions, the first mounting portion being terminated to a power terminal of the first battery module; a female terminal coupled to the second mounting portion, the female terminal is a quick connect type connector that enables coupling to the power terminal of the second battery module without the use of any tools, the female terminal comprising: a terminal body having a receptacle configured to receive and receiving a power terminal of the second battery module, the terminal body being separately provided from and coupled to the second mounting portion to mechanically and electrically connect the terminal body to the flexible conductor, the terminal body having an open front end open to the receptacle and configured to receive the power terminal of the second battery module therethrough; a contact spring is received in the receptacle and is electrically connected to the terminal body, the contact spring having spring beams defining interfaces for the power terminal of the second battery module to create a power path to the power terminal of the second battery module; characterised in that the first mounting portion of the flexible conductor is terminated directly to and welded directly to the power terminal of the first battery module and the female terminal is a quick disconnect type connector.

The invention will now be described by way of example with reference to the accompanying drawings in which:
Figure 1 illustrates an electrical system using a power terminal connector formed in accordance with an exemplary embodiment to connect battery modules.
Figure 2 illustrates a portion of the electrical system showing the power terminal connector electrically connecting the adjacent battery modules.
Figure 3 illustrates a portion of the battery modules showing power terminals.
Figure 4 is an exploded view of a power terminal connector formed in accordance with an exemplary embodiment.
Figure 5 is a front perspective view of a portion of the power terminal connector.
Figure 6 is an enlarged view of a portion of the power terminal connector.
Figure 7 is a cross sectional view of a portion of the power terminal connector showing a power terminal loaded into the power terminal connector.
Figure 8 illustrates the power terminal connector coupled to a power terminal.
Figure 9 illustrates the power terminal connector coupled to a power terminal.
Figure 10 illustrates the power terminal connector coupled to a power terminal.
Figure 11 illustrates a flexible conductor of a power terminal connector in accordance with an exemplary embodiment.
Figure 12 illustrates a flexible conductor of a power terminal connector in accordance with an exemplary embodiment.
Figure 13 illustrates a flexible conductor of a power terminal connector in accordance with an exemplary embodiment.

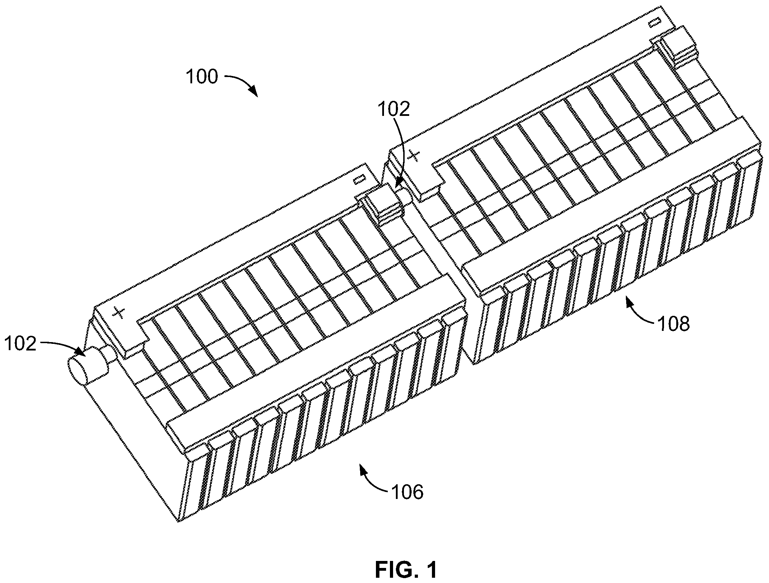

Figure 1 illustrates an electrical system 100 using a power terminal connector 102 formed in accordance with an exemplary embodiment to connect modules 106, 108. The modules 106, 108 may be batteries and may be referred to hereinafter as batteries or battery modules 106, 108. The electrical system 100 may be a power supply system. The power terminal connector 102 may be used in an automotive application, such as part of a high voltage battery system of a hybrid or electric vehicle. The power terminal connector 102 may be used in different applications in alternative embodiments.

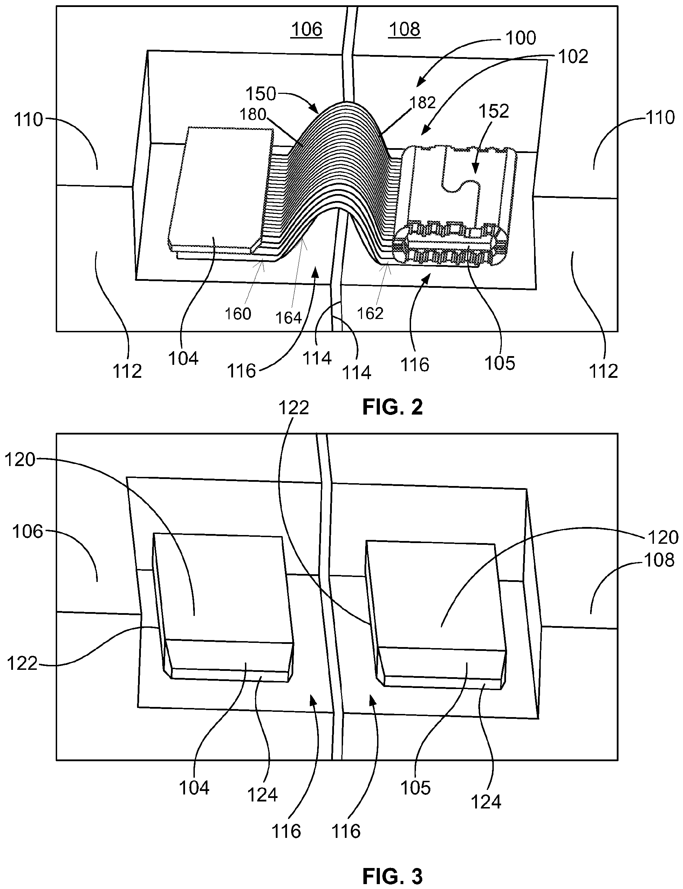

Figure 2 illustrates a portion of the electrical system 100 showing the power terminal connector 102 electrically connecting the adjacent battery modules 106, 108. The power terminal connector 102 includes a flexible conductor 150 and a female terminal 152 terminated to the flexible conductor 150 to mechanically and electrically connect the female terminal 152 to the flexible conductor 150. The power terminal connector 102 is electrically connect to corresponding first and second power terminals 104, 105 of the batteries 106, 108.

The power terminal connector 102 electrically connects the batteries 106, 108. The power terminal connector 102 represents a buss or jumper that interconnects the batteries 106, 108. The batteries 106, 108 may be any voltage battery used in a vehicle. Optionally, the vehicle may be an electric, hybrid-electric vehicle, or any energy storage system and the batteries 106, 108 may be used as part of the power system for the electric vehicle or hybrid-electric vehicle or any energy storage systems.

The power terminal connector 102 is a quick connect/quick disconnect type of connector that may be easily and quickly terminated to the power terminal 105 of the battery 108. The power terminal connector is permanently jointed to the power terminal 104. The power terminal connector 102 has a very low profile so as to conserve space around the batteries 106, 108.

Each of the batteries 106, 108 includes a top 110, a front 112 perpendicular to the top 110, and a side 114 perpendicular to the top 110 and the front 112. The sides 114 of the batteries 106, 108 face one another. The top 110, front 112 and side 114 generally meet at a corner of the battery 106, 108. In an exemplary embodiment, the battery 106, 108 includes a notched-out area 116 at the corner. The notched-out area 116 is recessed below the top 110, behind the front 112, and inward from the side 114. The notched-out area 116 defines a window or envelope defined by planes extending along the top 110, front 112 and side 114.

The flexible conductor 150 spans across the interface between the sides 114 of the batteries 106, 108 and the power terminal connectors 102 are positioned in both notched-out areas 116. The power terminals 104, 105 are provided at the corresponding notched-out areas 116. The power terminal connectors 102 are received in the notched-out areas 116 such that the power terminal connector 102 does not extend beyond (e.g., above) the tops 110 of the batteries 106, 108. The power terminal connector 102 is received in the notched-out areas 116 such that the power terminal connector 102 does not extend beyond (e.g., outward from) the fronts 112 of the batteries 106, 108. As such, other components, such as another battery may be positioned immediately in front of the batteries 106, 108 without interference from the power terminal connectors 102. Another component, such as a cover or lid may extend along the tops 110 of the batteries 106, 108 without interference from the power terminal connectors 102. In an alternative embodiment, recessing of the power terminal connectors 102 may not be necessary, such as when no space constraints are required. For example, the power terminals 104, 105 may be exposed along the tops 110 of the batteris 106, 108 and the power terminal connector 102 may span across the space between the batteries 106, 108.

In an exemplary embodiment, the flexible conductor 150 is a flexible connector that allows relative movement between the batteries 106, 108. In an exemplary embodiment, the female terminal 152 is terminated to one end of the flexible conductor 150. Such female terminal 152 is quickly connected to and disconnected from the power terminal 105, such as by plugging onto and unplugging from the power terminal 105. The other end of the flexible conductor 150 is directly and permanently terminated to the first power terminal 104, which may be a positive terminal of the corresponding battery 106. The flexible conductor 150 may be laser welded, ultrasonically welded or welded by other processes. Such direct connection to the first power terminal 104 eliminates the need for a second female terminal and saves the space needed for a second female terminal. Such direct connection eliminates many components and thus reduces the overall cost of the power terminal connector 102.

The flexible conductor 150 may be a stack of copper sheets. The flexible conductor 150 may be a braided cable that is flexible. The flexible conductor 150 may be a wire or cable with one or more strands or wires that form the conductor. The flexible conductor 150 spans across the interface between the sides 114 and accommodates different spacing between the batteries 106, 108, movement of the batteries 106, 108, such as from vibration, and the like.

Figure 3 illustrates a portion of the batteries 106, 108 showing the notched-out areas 116 with the power terminals 104, 105 extending from the batteries 106, 108 at corresponding notched-out areas 116. In an exemplary embodiment, the power terminals 104, 105 are fixed connectors of the batteries 106, 108 providing an interface for the power terminal connector 102 (shown in Figure 1).

The power terminals 104, 105 extend from, and are electrically coupled to, the batteries 106, 108. The power terminals 104, 105 may be welded or bolted onto the B+ or B- terminals of corresponding cells of the batteries. In an exemplary embodiment, the power terminals 104, 105 are blade terminals that are generally flat and extend along blade axes (e.g. central, longitudinal axes of the power terminals 104, 105). Other types of power terminals may be used in alternative embodiments, such as posts or pins. The power terminals may have other shapes in alternative embodiments, such as cylindrical shapes. Each of the power terminals 104, 105 includes a top 120, a bottom 122 and a tip 124. The power terminals 104, 105 are illustrated as extending horizontally, however the power terminals 104, 105 may be at other orientations, such as vertically.

With additional reference to Figure 2, during assembly, the power terminal connector 102 is permanently terminated to the first power terminal 104 and the flexible conductor 150 extends from the notched-out area 116 of one battery 106 into the notched-out area 116 of the other battery 108. The female terminal 152 is plugged onto the power terminal 105 of the battery 108. The power terminal connector 102 electrically connects the power terminals 104, 105 through the flexible conductor 150. The female terminal 152 is a quick connect type connector that may be quickly and easily coupled to the power terminal 105. The female terminal 152 may be coupled to the power terminal 105 without the use of any tools. The female terminal 152 may be coupled by simply pressing the female terminal 152 onto the power terminal 105 in a loading direction without any other actuation, locking or latching required.

With reference to Figure 2, in an exemplary embodiment, the flexible conductor 150 may be a buss bar used to buss two powered components. Optionally, multiple flexible conductors may be used to increase the current carrying capacity of the power terminal connector 102, such as multiple flexible conductors arranged in a stacked configuration and mechanically and electrically connected to the female terminal 152 and power terminal 104 (shown in Figure 3).

The flexible conductor 150 includes a first mounting portion 160, a second mounting portion 162 and a flexible section 164 between the first and second mounting portions 160, 162. The first mounting portion 160 is configured to be terminated directly and permanently to the first power terminal 104. The female terminal 152 is coupled to the second mounting portion 162. In an exemplary embodiment, the female terminal 152 is welded to the mounting portion 162. For example, the female terminal 152 may be laser welded, ultrasonically welded or welded by other processes. In other embodiments, the female terminal 152 may be mechanically and electrically terminated to the flexible conductor 150 by other means and processes.

In an exemplary embodiment, the first mounting portion 160, second mounting portion 162 and/or flexible section 164 include a plurality of flexible metal (e.g. copper) strands bundled together. Using many small strands allows the conductor to remain more flexible as compared to a single big solid wire. Additionally, the stranded conductor may be scaled up or down by using a conductor having greater or fewer strands to control the current carrying capacity of the buss bar, wherein more strands allows for a higher current carrying capability. In an alternative embodiment, a high flexible stranded cable may be used that includes an insulated jacket surrounding the strand wires, exposed at the ends for termination to the female terminal 152 and power terminal 104. Such stranded cable may be used to protect from inadvertent touching of the wires. In an alternative embodiment, the flexible conductor 150 may include a flexible, braided wire. In other alternative embodiments, the flexible conductor 150 may have multiple layers of metal sheets in a stacked configuration. For example, the sheet may be folded over multiple times to create a stack-up. The number of folds in the stack-up controls the current carrying ability of the flexible conductor 150, wherein more folds (e.g. a thicker stack-up) allows for a higher current carrying capability. Additionally, the folding allows the use of a thin, flexible sheet to be used but still allow for high current carrying ability. Optionally, the layers may be laminated. It is understood that all exposed conductors may be insulated by a cover or housing.

The flexible section 164 is configured to change shape to change the relative position of the first and second mounting portions 160, 162. The flexible section 164 may be lengthened or shortened to variably position the first mounting portion 160 with respect to the second mounting portion 162. The flexible section 164 is shown in a bent state, positioning the first mounting portion 160 closer to the second mounting portion 162 than when the flexible section 164 is relatively flat. In the illustrated embodiment, the flexible section 164 is U-shaped defined by first leg 180 and a second leg 182. The first and second legs 180, 182 are movable with respect to one another to change the angle between the first and second legs 180, 182. Moving the first and second legs 180, 182 varies an axial position of the first mounting portion 160 and the second mounting portion 162. Moving the first and second legs 180, 182 changes the spacing between the first mounting portion 160 and the second mounting portion 162. Optionally, the mounting portions 160, 162 may be movable in three dimensions (e.g. X-Y-Z) with respect to one another and the flexible section 164 accommodates such movement.

The flexible conductor 150 is electrically conductive. In an exemplary embodiment, the flexible conductor 150 is manufactured from copper, however other materials may be used in alternative embodiments. In an exemplary embodiment, the first mounting portion 160, second mounting portion 162 and flexible section 164 are integral and formed from a single piece of copper. Optionally, more than one piece of copper may be used to form the conductor, such as multiple sheets of copper or multiple strands of copper wire. The first mounting portion 160, second mounting portion 162 and flexible section 164 may be a multi-layered structure. The first mounting portion 160 and second mounting portion 162 may have equal or at least one more layer than flexible section 164.

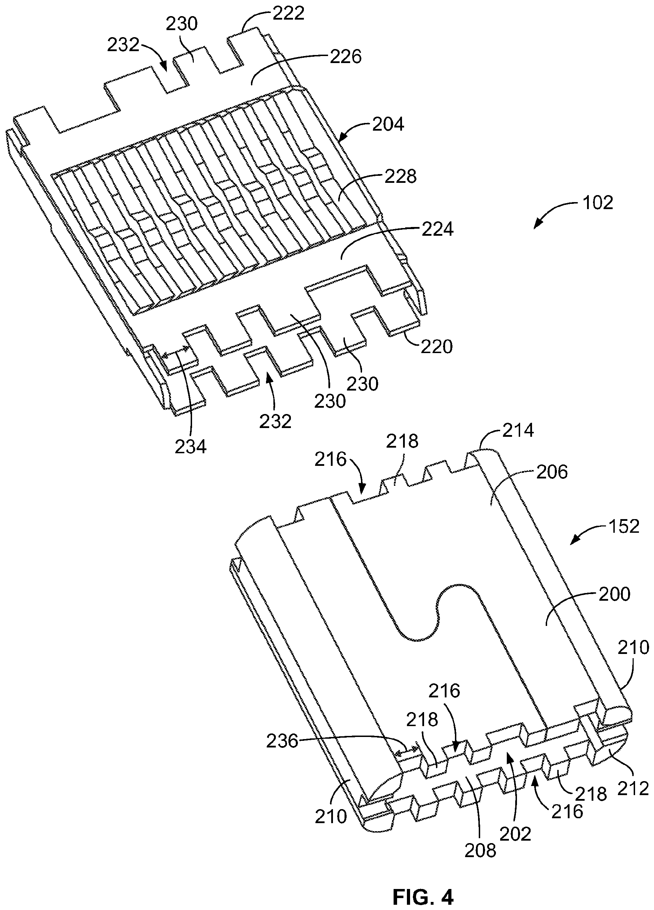

Figure 4 is an exploded view of a portion of the power terminal connector 102 showing the female terminal 152. The terminal 152 includes a terminal body 200 that is configured to be electrically connected to the flexible conductor 150 (shown in Figure 2). The terminal body 200 is separately provided from, and coupled to, the flexible conductor 150, such as by welding. The terminal body 200 is box-shaped defining a receptacle 202. The receptacle 202 is sized and shaped to receive the power terminal 105 (shown in Figure 3).

A contact spring 204 is separately provided from and configured to be received in the receptacle 202. The contact spring 204 is used to electrically connect the terminal body 200 to the power terminal 105. The contact spring 204 defines a power path between the terminal body 200 and the power terminal 105. The contact spring 204 provides multiple points of contact with the terminal body 200. The contact spring 204 provides multiple points of contact with the power terminal 105. The contact spring 204 defines a separable mating interface with the power terminal 105 to allow quick connection and quick disconnection. The contact spring 204 includes features for securing the contact spring 204 in the terminal body 200, such as to resist fretting during vibration of the contact spring 204 and the terminal body 200.

In the illustrated embodiment, the terminal body 200 is box-shaped having a rectangular cross-section; however other shapes are possible in alternative embodiments, including a cylindrical shape. The terminal body 200 includes a top wall 206, a bottom wall 208 and opposite side walls 210 that define the receptacle 202. Optionally, the flexible conductor 150 may be welded directly to the exterior of the bottom wall 208. The terminal body 200 has an open front end 212 open to the receptacle 202. The power terminal 105 is configured to be loaded into the receptacle 202 through the open front end 212. Optionally, the terminal body 200 may include an open rear end 214 opposite the front end 212. The open rear end 214 allows the power terminal 105 to pass entirely through the terminal body 200 without bottoming out against any part of the terminal body 200. In an exemplary embodiment, the terminal body 200 is a stamped and formed body having a stamped workpiece folded into the box-shape with free ends thereof being optionally secured together. Other shapes are possible in alternative embodiments.

The terminal body 200 includes securing features for securing the contact spring 204 within the receptacle 202. In the illustrated embodiment, the securing features include a series of notches 216 separated by posts 218. Optionally, the notches 216 may be provided along both the front end 212 and the rear end 214. Alternatively, the notches 216 may be provided along either the front end 212 or the rear end 214. Optionally, the notches 216 are provided along the top wall 206, the bottom wall 208 and the side walls 210. Alternatively, the notches 216 may be provided on less walls, such as the top wall 206, the bottom wall 208 or the side walls 210. The notches 216 receive portions of the contact spring 204. The contact spring 204 may be secured in the notches 216 by an interference fit. Optionally, the posts 218 may be locked around the contact spring 204. For example, the posts 218 may be flared outward into the notches 216 to capture the contact spring 204 in the notches 216. In other embodiments, latches or other features may be provided to secure the contact spring 204 in the notches 216.

The contact spring 204 extends between a front end 220 and a rear end 222. The contact spring 204 has a pair of circumferential bands, identified as a first band 224 and a second band 226 at the front and rear ends 220, 222, respectively. The first and second bands 224, 226 are configured to engage the terminal body 200 when the contact spring 204 is loaded into the receptacle 202 to electrically connect the contact spring 204 to the terminal body 200. Optionally, the bands 224, 226 may be held in the receptacle 202 by an interference fit with the top wall 206, bottom wall 208 and/or the side walls 210. Optionally, the contact spring 204 may be a stamped and formed piece.

A plurality of spring beams 228 extend between the circumferential bands 224, 226 along a top and a bottom of the contact spring 204, thus defining upper spring beams 228 and lower spring beams 228, respectively. In the illustrated embodiment, the spring beams 228 are generally inwardly tapered towards the middle of the contact spring 204. The upper and lower spring beams 228 extend toward each other at the center of the receptacle 202. The shape of the spring beams 228 ensure that the spring beams 228 engage the power terminal 105 when loaded therein. In an exemplary embodiment, the spring beams 228 are deflectable and may be deflected outward when the power terminal 105 is loaded into the contact spring 204. The contact spring 204 defines an electrical path between the power terminal 105 and the terminal body 200.

The contact spring 204 includes securing features for securing the contact spring 204 within the receptacle 202. In the illustrated embodiment, the securing features include a series of tabs 230 separated by gaps 232. The tabs 230 may be stamped with the contact spring 204 and bent into form. Optionally, the tabs 230 may extend from both the first band 224 and the second band 226. Alternatively, the tabs 230 may be provided along either the first band 224 or the second band 226. Optionally, the tabs 230 may extend generally perpendicular from the bands 224, 226. For example, the tabs 230 may be bent at approximately 90°. Optionally, the tabs 230 may extend from the first band 224 in at least two different directions. For example, the tabs 230 may extend upward from the top, extend downward from the bottom and extend outward from both sides of the corresponding bands 224, 226. Alternatively, the tabs 230 may be provided on fewer portions of the bands 224, 226, such as only the top or only the bottom.

The tabs 230 are received in corresponding notches 216. The gaps 232 receive corresponding posts 218. The tabs 230 may be secured in the notches 216 by an interference fit with the adjacent posts 218. The posts 218 may be secured in the gaps 232 by an interference fit with the adjacent tabs 230. Optionally, the posts 218 may be locked around the tabs 230. For example, the posts 218 may be flared outward in front of the tabs 230 to capture the tabs 230 in the notches 216.

The tabs 230 have corresponding tab widths 234. Optionally, different tabs 230 may have different tab widths 234. The notches 216 have corresponding notch widths 236. Optionally, different notches 216 may have different notch widths 236. The notches 216 and tabs 230 may be keyed, such as by having certain widths, to ensure a single orientation of the contact spring 204 in the terminal body 200. Optionally, the tabs 230 may be secured in the notches 216 by other means, such as by flaring the posts 218 to lock the tabs 230 in the notches 216. Alternatively, the notch widths 236 may be slightly narrower than the corresponding tab widths 234 such that the tabs 230 must be forced to fit into the notches 216. The tabs 230 are then held in the notches 216 by an interference fit.

In an alternative embodiment, rather than having the tabs 230 and notches 216, the contact spring 204 and terminal body 200 may have relatively flat front and rear edges. The contact spring 204 may rely upon an interference fit to mechanically and electrically connect the contact spring 204 to the terminal body 200.

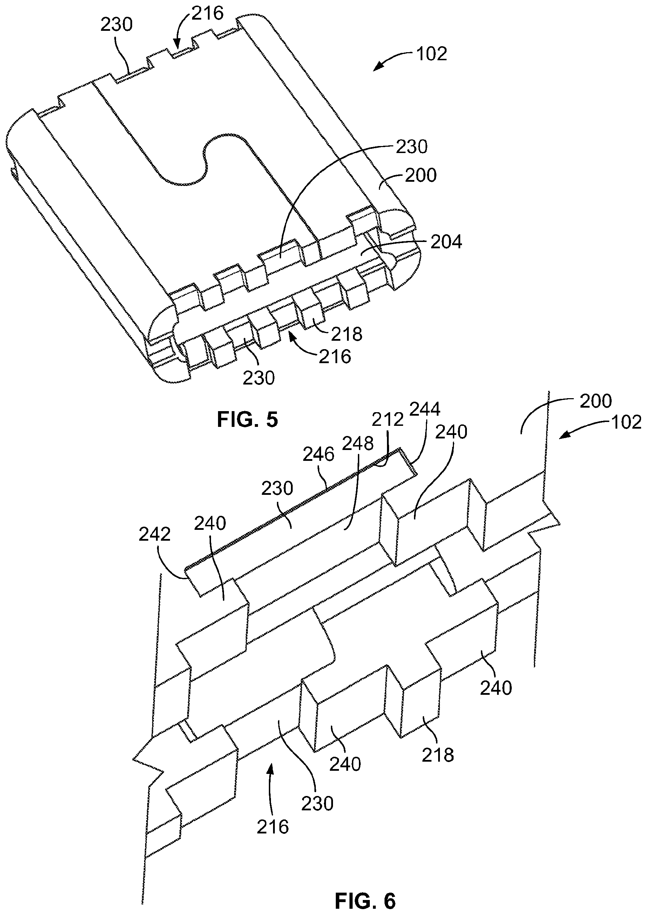

Figure 5 is a front perspective view of the female terminal 152 showing the contact spring 204 loaded into the terminal body 200. The tabs 230 are received in corresponding notches 216 to secure the contact spring 204 in the receptacle 202. The tabs 230 may be held in the notches 216 by an interference fit. Such interference fit reduces fretting induced during vibration of the female terminal 152. Optionally, the female terminal 152 may be used as shown without flaring the posts 218 (example of flaring as shown with reference back to Figure 1 and/or Figure 6).

Figure 6 is an enlarged view of a portion of the female terminal 152. Figure 6 illustrates the posts 218 flared to secure the tabs 230 in the corresponding notches 216. The posts 218 may be flared by a tool or die.

The posts 218 are flared outward into the notches 216 to form flared edges 240. The flared edges 240 overlap the tabs 230 to lock the tabs 230 in the notches 216. The flared edges 240 engage the tabs 230 to create points of contact with the corresponding tabs 230. In an exemplary embodiment, at the front end 212 of the terminal body 200 (however a similar arrangement may occur at the rear end 214), each tab 230 engages the front end 212 to create one or more points of contact therewith, each tab 230 engages one or both posts 218 on each side of the corresponding tab 230 to create one or more points of contact therewith and each tab 230 engages one or more flared edges 240 to create one or more points of contact therewith. For example, the tabs 230 each include first and second edges 242, 244 and first and second sides 246, 248 extending between the first and second edges 242, 244. The first and second edges 242, 244 and first and second sides 246, 248 each have at least one point of contact with the terminal body 200 to create a power path between the terminal body 200 and the contact spring 204. For example, the first and second edges 242, 244 engage the posts 218. The first side 246 engages the front end 212. The second side 248 engages the flared edges 240. Furthermore, the first band 224 may engage the terminal body 200 to create one or more points of contact therewith. Each point of contact defines a power path between the contact spring 204 and the terminal body 200. Having many points of contact between the contact spring 204 and the terminal body 200 lowers the resistance across such interface and allows higher current to flow across the interface.

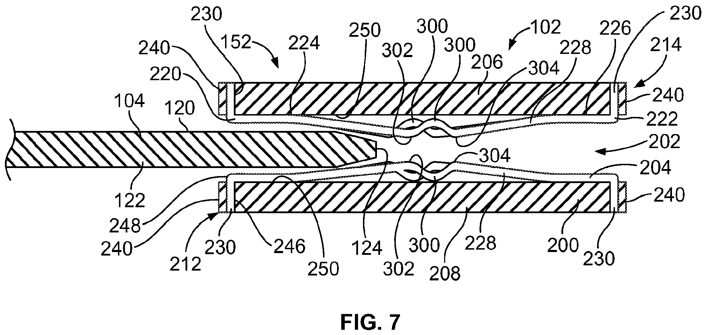

Figure 7 is a cross sectional view of a portion of the female terminal 152 showing the power terminal 105 being loaded into the terminal 152. The tip 124 of the power terminal 105 is loaded into the receptacle 202 and into the contact spring 204. The upper and lower spring beams 228 engage the top 120 and bottom 122 of the power terminal 105 to electrically connect the terminal 152 to the power terminal 105.

The contact spring 204 is loaded into the receptacle 202 such that the first and second bands 224, 226 abut against and engages interior surfaces 250 of the top and bottom walls 206, 208 (and the side walls 210 shown in Figure 2) proximate to the front and rear ends 212, 214, respectively. The bands 224, 226 each define at least one point of contact with the terminal body 200 to create an electrical power path between the contact spring 204 and the terminal body 200. The tabs 230 extend from the first and second bands 224, 226 along the front and rear ends 212, 214. The first side 246 of each tab 230 engages the front end 212 to create one or more points of contact with the terminal body 200. The second side 248 of each tab engages the flared edge(s) 240 when the flared edge(s) 240 are pressed against the second side 248 to create one or more points of contact with the terminal body 200.

In an exemplary embodiment, each of the spring beams 228 may define an additional point of contact with the terminal body 200 to create another electrical power path between the contact spring and the terminal body 200. For example, in an exemplary embodiment, each spring beam 228 includes an overstress bump 300 facing outward toward the terminal body 200. When the power terminal 105 is loaded into the terminal 152, the spring beams 228 are deflected outward. The overstress bumps 300 are forced outward until the overstress bumps 300 engage the terminal body 200. The spring beams 228 are electrically connected to the terminal body 200 via the direct engagement between the overstress bumps 300 and the terminal body 200, such as along the top wall 206 or the bottom wall 208. The overstress bumps 300 limit the amount of deflection of the spring beams 228 preventing overstress and/or plastic deformation of the spring beams 228. When the overstress bumps 300 engage the terminal body 200 further deflection of the spring beams 228 increases the spring force imparted onto the power terminal 105 because the effective beam length of the spring beams 228 is reduced when the overstress bumps 300 engage the terminal body 200.

In an exemplary embodiment, each of the spring beams 228 includes at least two contact bumps 302, 304. The contact bumps 302, 304 define interfaces of the spring beams 228 that are configured to engage the power terminal 105. As such, each spring beam 228 includes multiple points of contact with the power terminal 105 creating a better electrical connection therebetween. The contact bumps 302, 304 are the interior-most portions of the spring beams 228 that are furthest interior from the terminal body 200. The contact bumps 302, 304 are the portions of the spring beams 228 that directly engage the power terminal 105 when the power terminal 105 is loaded into the terminals 152. Optionally, the contact bumps 302, 304 may be defined by the overstress bump 300. For example, the contact bumps 302 304 may be located where the spring beams 228 start to transition or are formed outward to define the overstress bumps 300. The overstress bumps 300 are located between the contact bumps 302, 304.

Optionally, the overstress bumps 300 and corresponding contact bumps 302, 304 may be approximately centered along the spring beams 228 between the first and second bands 224, 226. Optionally, the spring beams 228 may be formed with offset overstress bumps 300 and offset contact bumps 302, 304. For example, adjacent spring beams 228 may have the bumps 300, 302, 304 offset to a forward position or a rearward position (e.g. closer to the front end 220 or closer to the rear end 222, respectively). Such staggering reduces the total insertion force for mating the female terminal 152 to the power terminal 105. Optionally, rather than having each alternating spring beam 228 staggered, other patterns of offsetting of the bumps 300, 302, 304 may be utilized, such as having all of the upper spring beams 228 being staggered forward and all of the lower spring beams 228 staggered rearward. Optionally, the bumps 300, 302, 304 may be staggered at more than two different positions.

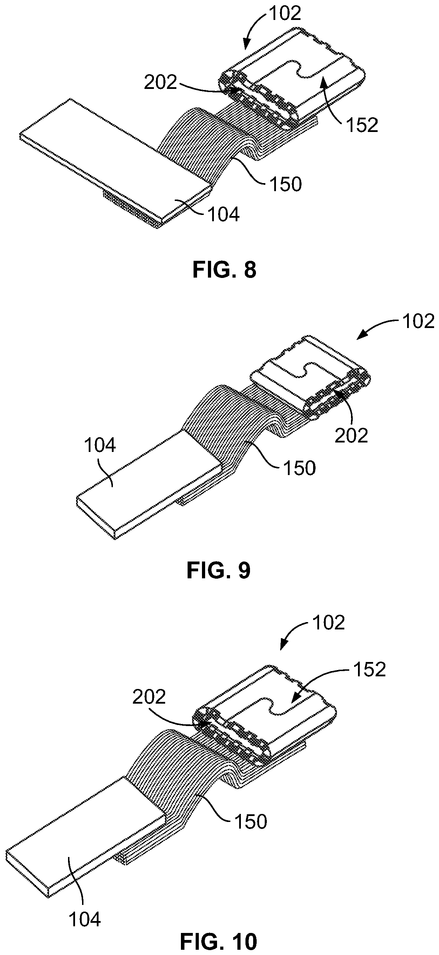

Figure 8 illustrates the power terminal connector 102 coupled to the first power terminal 104 with the female terminal 152 in a different orientation. The female terminal 152 is rotated 90° relative to the orientation shown in Figure 2. The receptacle 202 is oriented parallel to the longitudinal axis of the flexible conductor 150. The flexible conductor 150 is oriented perpendicular to a longitudinal axis of the first power terminal 104.

Figure 9 illustrates the power terminal connector 102 coupled to the first power terminal 104 in a different orientation than the orientation shown in Figure 8. The flexible conductor 150 is oriented parallel to the longitudinal axis of the first power terminal 104. The receptacle 202 is oriented perpendicular to the longitudinal axis of the flexible conductor 150.

Figure 10 illustrates the power terminal connector 102 coupled to the first power terminal 104 with the female terminal 152 in a different orientation than the orientation shown in Figure 9. The receptacle 202 is oriented parallel to the longitudinal axis of the flexible conductor 150. The flexible conductor 150 is oriented parallel to a longitudinal axis of the first power terminal 104.

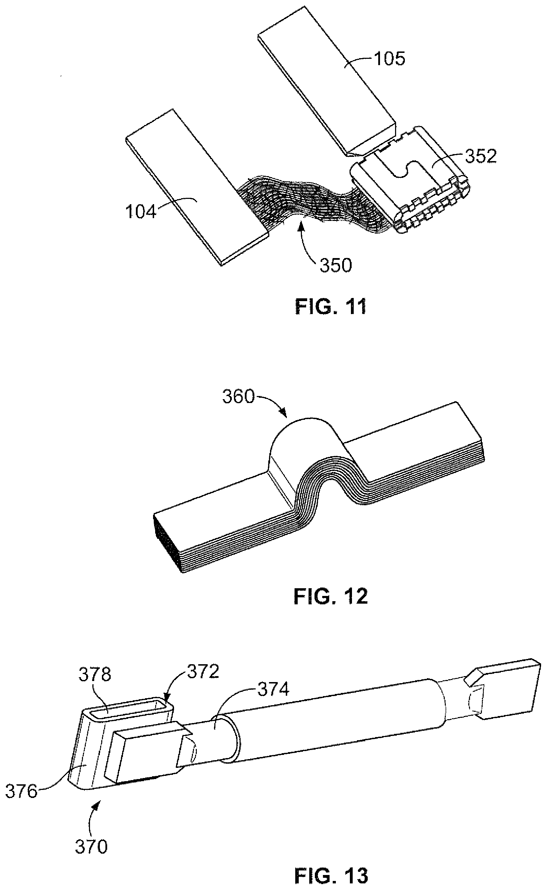

Figure 11 illustrates a flexible conductor 350 including flexible braided wires. For example, the flexible conductor 350 may include copper braided wires. The weave pattern may affect the flexibility of the structure. The size of the wires may affect the flexibility of the structure. The flexible conductor 350 is terminated to the first power terminal 104. A female terminal 352 is terminated to an opposite end of the flexible conductor 350 and is poised for mating with the second power terminal 105.

Figure 12 illustrates a flexible conductor 360 having multiple layers of flexible metal sheets. Optionally, the sheets may be laminated. The sheets may be folded such that the flexible conductor 360 is made from a single sheet formed into multiple layers. Gaps between the layers allow the structure to be flexible. The sheet thickness may affect the flexibility of the structure. One end of the flexible conductor 360 is terminated directly to the power terminal 104 (shown in Figure 3) and the other end of the flexible conductor 360 may have a female terminal connected thereto.

Figure 13 illustrates a power terminal connector 370 formed in accordance with an exemplary embodiment. The power terminal connector 370 includes a female terminal 372 terminated to one end of a flexible conductor 374. The other end of the flexible conductor is configured to be terminated to a power terminal, such as the power terminal 104 (shown in Figure 3) of the battery 106 (shown in Figure 3). The power terminal connector 370 is welded to the corresponding power terminal. In an exemplary embodiment, the flexible conductor 374 is a cable and may be referred to hereinafter as cable 374. The female terminal 372 may be welded to the end of the cable 374. Optionally, the cable 374 may be terminated or welded 90° to the illustrated cable orientation, or at another orientation. The female terminal 372 may be similar to the female terminal 152 (shown in Figure 2), including a terminal body 376 and a contact spring 378.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the scope of the invention defined by the appended claims. Dimensions, types of materials, orientations of the various components, and the number and positions of the various components described herein are intended to define parameters of certain embodiments, and are by no means limiting and are merely exemplary embodiments. Many other embodiments and modifications within the scope of the claims will be apparent to those of skill in the art upon reviewing the above description. The scope of the invention should, therefore, be determined with reference to the appended claims.

## Claims

1. An electrical system (100) comprising a first battery module (106), a second battery module (108) and a power terminal connector (102), the power terminal connector (102) comprising:
a flexible conductor (150) having a first mounting portion (160), a second mounting portion (162) and a flexible section (164) between the first and second mounting portions, the first mounting portion (160) being terminated to a power terminal (104) of the first battery module (106);
a female terminal (152) coupled to the second mounting portion, the female terminal (152) is a quick connect type connector that enables coupling to the power terminal (105) of the second battery module (108) without the use of any tools, the female terminal comprising:
a terminal body (200) having a receptacle (202) configured to receive and receiving a power terminal (105) of the second battery module (108), the terminal body (200) being separately provided from and coupled to the second mounting portion (162) to mechanically and electrically connect the terminal body (200) to the flexible conductor (150), the terminal body (200) having an open front end (212) open to the receptacle and configured to receive the power terminal (105) of the second battery module (108) therethrough;
a contact spring (204) is received in the receptacle (202) and is electrically connected to the terminal body (200), the contact spring (204) having spring beams (228) defining interfaces for the power terminal of the second battery module to create a power path to the power terminal (105) of the second battery module (108);
**characterised in that** the first mounting portion (160) of the flexible conductor (150) is terminated directly to and welded directly to the power terminal (104) of the first battery module (106) and the female terminal (152) is a quick disconnect type connector.

2. The electrical system (100) of claim 1, wherein the terminal body (200) is welded directly to the flexible conductor (150).

3. The electrical system (100) of any preceding claim, wherein the flexible section (164) allows the first and second mounting portions (160, 162) to move with respect to one another to vary a position of the first mounting portion with respect to the second mounting portion.

4. The electrical system (100) of any preceding claim, wherein the flexible section (164) comprises a flexible braided wire.

5. The electrical system (100) of one of claims 1 to 3, wherein the flexible section (164) comprises a plurality of flexible metallic strands bundled together.

6. The electrical system (100) of any one of claims 1 to 3, wherein the flexible conductor (164) comprises a metal sheet folded over to have multiple layers spanning the flexible section and the first and second mounting portions (160, 162).

7. The electrical system (100) of any preceding claim , wherein the flexible section (164) is U-shaped having a first leg (180) and a second leg (182), the first and second legs movable with respect to one another to change an angle between the first and second legs to change the spacing between the first and second mounting portions (160,162).

8. The electrical system (100) of any preceding claim, wherein the terminal body (200) is box-shaped including a top wall (206), a bottom wall (208) and opposite side walls (210) defining the receptacle (202), the bottom wall being welded to the first mounting portion (160) to mechanically and electrically connect the female terminal (152) to the flexible conductor (150).

## Patentansprüche

1. Elektrisches System (100), das ein erstes Batteriemodul (106), ein zweites Batteriemodul (108) und einen Stromanschlussverbinder (102) umfasst, wobei der Stromanschlussverbinder (102) Folgendes umfasst:
einen flexiblen Leiter (150) mit einem ersten Montageteil (160), einem zweiten Montageteil (162) und einem flexiblen Abschnitt (164) zwischen dem ersten und dem zweiten Montageteil, wobei der erste Montageteil (160) auf einen Stromanschluss (104) des ersten Batteriemoduls (106) terminiert ist;
einen mit dem zweiten Montageteil gekoppelten Aufnahmeanschluss (152), wobei der Aufnahmeanschluss (152) ein Verbinder des Schnellverbindungstyps ist, der ein Koppeln des Stromanschlusses (105) des zweiten Batteriemoduls (108) ohne Verwendung eines Werkzeugs ermöglicht, wobei der Aufnahmeanschluss Folgendes umfasst:
einen Anschlusskörper (200) mit einer Fassung (202), der zum Aufnehmen eines Stromanschlusses (105) des zweiten Batteriemoduls (108) konfiguriert ist und ihn aufnimmt, wobei der Anschlusskörper (200) separat von dem zweiten Montageteil (162) vorgesehen und damit gekoppelt ist, um den Anschlusskörper (200) mechanisch und elektrisch mit dem flexiblen Leiter (150) zu verbinden, wobei der Anschlusskörper (200) ein offenes Frontende (212) hat, das gegenüber der Fassung offen und zum Aufnehmen des Stromanschlusses (105) des zweiten Batteriemoduls (108) dadurch konfiguriert ist;
eine Kontaktfeder (204), die in der Fassung (202) aufgenommen und elektrisch mit dem Anschlusskörper (200) verbunden ist, wobei die Kontaktfeder (204) Federstreifen (228) aufweist, die Schnittstellen für den Stromanschluss des zweiten Batteriemoduls definieren, um einen Strompfad zum Stromanschluss (105) des zweiten Batteriemoduls (108) zu erzeugen;
**dadurch gekennzeichnet, dass** der erste Montageteil (160) des flexiblen Leiters (150) direkt auf den Stromanschluss (104) des ersten Batteriemoduls (106) terminiert und direkt damit verschweißt ist, und der Aufnahmeanschluss (152) ein Verbinder des Schnelltrenntyps ist.

2. Elektrisches System (100) nach Anspruch 1, wobei der Anschlusskörper (200) direkt auf den flexiblen Leiter (150) geschweißt ist.

3. Elektrisches System (100) nach einem vorherigen Anspruch, wobei der flexible Abschnitt (164) eine Bewegung des ersten und zweiten Montageteils (160, 162) mit Bezug zueinander zulässt, um eine Position des ersten Montageteils mit Bezug auf den zweiten Montageteil zu variieren.

4. Elektrisches System (100) nach einem vorherigen Anspruch, wobei der flexible Abschnitt (164) ein flexibles Drahtgeflecht umfasst.

5. Elektrisches System (100) nach einem der Ansprüche 1 bis 3, wobei der flexible Abschnitt (164) mehrere gebündelte flexible metallische Stränge umfasst.

6. Elektrisches System (100) nach einem der Ansprüche 1 bis 3, wobei der flexible Leiter (164) ein umgefaltetes Metallblech umfasst, so dass mehrere Schichten den flexiblen Abschnitt und den ersten und zweiten Montageteil (160, 162) überbrücken.

7. Elektrisches System (100) nach einem vorherigen Anspruch, wobei der flexible Abschnitt (164) U-förmig mit einem ersten Schenkel (180) und einem zweiten Schenkel (182) ist, wobei der erste und zweite Schenkel mit Bezug zueinander beweglich sind, um einen Winkel zwischen dem ersten und zweiten Schenkel zu ändern, um den Abstand zwischen dem ersten und zweiten Montageteil (160, 162) zu ändern.

8. Elektrisches System (100) nach einem vorherigen Anspruch, wobei der Anschlusskörper (200) kastenförmig mit einer oberen Wand (206), einer unteren Wand (208) und gegenüberliegenden Seitenwänden (210) ist, die die Fassung (202) definieren, wobei die untere Wand an den ersten Montageteil (160) geschweißt ist, um den Aufnahmeanschluss (152) mechanisch und elektrisch mit dem flexiblen Leiter (150) zu verbinden.

## Revendications

1. Système électrique (100) comprenant un premier module de batterie (106), un second module de batterie (108) et un connecteur de borne électrique (102), le connecteur de borne électrique (102) comprenant :
un conducteur souple (150) présentant une première partie de montage (160), une seconde partie de montage (162) et un segment souple (164) entre les première et seconde parties de montage, la première partie de montage (160) étant connectée à une borne électrique (104) du premier module de batterie (106) ;
une borne femelle (152) couplée à la seconde partie de montage, la borne femelle (152) étant un connecteur du type à connexion rapide qui permet le couplage à la borne électrique (105) du second module de batterie (108) sans utiliser d'outils, la borne femelle comprenant :
un corps de borne (200) présentant un réceptacle (202) configuré pour recevoir et recevant une borne électrique (105) du second module de batterie (108), le corps de borne (200) s'étendant séparément depuis la seconde partie de montage (162) et étant couplée à celle-ci pour connecter mécaniquement et électriquement le corps de borne (200) au conducteur souple (150), le corps de borne (200) présentant une extrémité frontale ouverte (212) qui est ouverte au réceptacle et configurée pour y recevoir la borne électrique (105) du second module de batterie (108) ;
un ressort de contact (204) reçu dans le réceptacle (202) et connecté électriquement au corps de borne (200), le ressort de contact (204) présentant des lames de ressort (228) définissant des interfaces pour la borne électrique du second module de batterie afin de créer un chemin électrique jusqu'à la borne électrique (105) du second module de batterie (108) ;
**caractérisé en ce que** la première partie de montage (160) du conducteur souple (150) est connectée directement et soudée directement à la borne électrique (104) du premier module de batterie (106) et la borne femelle (152) est un connecteur du type à déconnexion rapide.

2. Système électrique (100) selon la revendication 1, dans lequel le corps de borne (200) est soudé directement au conducteur souple (150).

3. Système électrique (100) selon l'une quelconque des revendications précédentes, dans lequel le segment souple (164) permet aux première et seconde parties de montage (160, 162) de se déplacer l'une par rapport à l'autre pour faire varier une position de la première partie de montage par rapport à la seconde partie de montage.

4. Système électrique (100) selon l'une quelconque des revendications précédentes, dans lequel le segment souple (164) comprend un fil tressé souple.

5. Système électrique (100) selon l'une quelconque des revendications 1 à 3, dans lequel le segment souple (164) comprend une pluralité de brins métalliques souples regroupés ensemble.

6. Système électrique (100) selon l'une quelconque des revendications 1 à 3, dans lequel le conducteur souple (164) comprend une feuille métallique repliée pour présenter de multiples couches enjambant le segment souple et les première et seconde parties de montage (160, 162).

7. Système électrique (100) selon l'une quelconque des revendications précédentes, dans lequel le segment souple (164) a une forme de U présentant une première jambe (180) et une seconde jambe (182), les première et seconde jambes pouvant se déplacer l'une par rapport à l'autre pour changer un angle entre les première et seconde jambes afin de changer l'espacement entre les première et seconde parties de montage (160,162).

8. Système électrique (100) selon l'une quelconque des revendications précédentes, dans lequel le corps de borne (200) a la forme d'une boîte comportant une paroi supérieure (206), une paroi inférieure (208) et des parois latérales opposées (210) définissant le réceptacle (202), la paroi inférieure étant soudée à la première partie de montage (160) pour connecter mécaniquement et électriquement la borne femelle (152) au conducteur souple (150) .
